# EUROPEAN PATENT APPLICATION

(11) **EP 3 477 573 A1**
(43) Date of publication of application: **01.05.2019**
(21) Application number: 17197963.6
(22) Date of filing: 24.10.2017
(51) Int. Cl.: G06Q 30/00, G06Q 20/00

(54) **METHOD FOR IMPROVING SECURITY OF AUTOMATIC DATA TRANSFER**

(71) Applicant: Mastercard International Incorporated, New York, NY 10577 (US)
(72) Inventor: LYNCH, Richard, Limerick (IE); WHELAN, Darragh, Saint Charles, MO Missouri 63303 (US)
(74) Representative: Gill Jennings & Every LLP

(57) **Abstract**

According to one aspect there is provided a computer-implemented method for raising a security alert, the method comprising a first server: receiving first encrypted data; decrypting the first encrypted data to identify a request for automatic transfer of second encrypted data from an originating data store on a second server to a receiving data store on a third server; analysing the identified request and stored data to determine a number of recurring automatic encrypted data transfer instructions for transfer of encrypted data from the originating data store to the receiving data store; determining that the number of recurring automatic encrypted data transfer instructions exceeds a predetermined threshold; and responsive thereto, raising a security alert. Other aspects provide a server for performing the method and a computer-readable medium storing computer-executable instructions which, when executed by a processor, cause the method to be performed.

## Description

### FIELD

The present disclosure relates to a method for improving the security of automatic data transfer systems by raising a security alert, a server for performing the method and a computer-readable medium storing computer-executable instructions which, when executed by a processor, cause the method to be performed.

### BACKGROUND

There are some kinds of data transfer which require regular repetition. For example, backup of data stored on user devices is advisable on a regular basis, to ensure the data is not lost if the device is damaged or stolen. Transfer of data representing monetary funds may also be required on a regularly repeated basis, for example to pay for subscription services. Convenient methods of automating such recurring data transfers have therefore been developed. These may include encryption of the data, for example if it represents confidential information or monetary funds.

However, automatic data transfer systems mean that if a criminal gains access to the credentials required to have data transferred to them, they can arrange for such unauthorised transfers to be repeated on a regular basis with very little effort on their part. Large amounts of data can thus be appropriated over an extended period of time without detection, by simply keeping each individual transfer small/low value enough that it will not be noticed.

What is needed is a method of improving the security of automatic data transfer systems.

### SUMMARY

According to a first aspect, there is provided a computer-implemented method for raising a security alert, the method comprising a first server: receiving first encrypted data; decrypting the first encrypted data to identify a request for automatic transfer of second encrypted data from an originating data store on a second server to a receiving data store on a third server; analysing the identified request and stored data to determine a number of recurring automatic encrypted data transfer instructions for transfer of encrypted data from the originating data store to the receiving data store; determining that the number of recurring automatic encrypted data transfer instructions exceeds a predetermined threshold; and responsive thereto, raising a security alert.

The first server could comprise a file adaptor, and receiving the first encrypted data could comprise the file adaptor: receiving an encrypted data file; and extracting from the encrypted data file identifiers for the originating and receiving data stores.

The method could further comprise the file adaptor: parsing an update file comprising the originating and receiving data store identifiers; and transmitting the update file to an in-memory grid engine comprised in the first server.

The method could further comprise the in-memory grid engine: receiving the update file; determining that it already stores a record comprising the combination of originating and receiving data store identifiers comprised in the update file, that record listing one or more recurring automatic encrypted data transfer instructions; determining that the update file represents a new recurring automatic encrypted data transfer instruction, and not a request according to one of the one or more recurring automatic encrypted data transfer instructions already listed in the record; adding the new recurring automatic encrypted data transfer instruction to the list in the record; determining the new number of recurring automatic encrypted data transfer instructions listed in the record; and transmitting the new number of recurring automatic encrypted data transfer instructions to a rules engine comprised in the first server.

The method could further comprise the rules engine: receiving the number of recurring automatic encrypted data transfer instructions; determining that the number of recurring automatic encrypted data transfer instructions exceeds the predetermined threshold; and raising the alert.

The update file could be transmitted to the in-memory grid engine via the rules engine.

The rules engine could store a user-defined table comprising: the predetermined threshold stored in association with the receiving data store identifier; and one or more further predetermined thresholds, each stored in association with a respective further receiving data store identifier.

The first server could be a card association server; the first encrypted data could be automatic billing data; the second encrypted data could represent monetary funds; the originating data store could be a consumer account; the second server could be an issuing bank server; the receiving data store could be a merchant account; the third server could be an acquiring bank server; and each recurring automatic encrypted data transfer instruction represents a subscription.

According to a second aspect there is provided a server configured to perform the method of the first aspect.

According to a third aspect there is provided a computer-readable medium storing computer-executable instructions which, when executed by a processor, cause the method of the first aspect to be performed.

### BRIEF DESCRIPTION OF THE FIGURES

Aspects of the present disclosure will now be described by way of example with reference to the accompanying figures. In the figures:
Figure 1A schematically illustrates an example system in which automatic data transfer can occur;
Figure 1B is a flowchart showing an example method for raising a security alert;
Figure 2 is a flowchart showing an example method for raising a fraud risk alert;
Figure 3 schematically illustrates an example system in which such a method could be used;
Figure 4 schematically illustrates an example server and the data flow within it; and
Figure 5 is a flowchart showing a more detailed example method of raising a fraud risk alert.

### DETAILED DESCRIPTION OF THE FIGURES

The following description is presented to enable any person skilled in the art to make and use the system, and is provided in the context of a particular application. Various modifications to the disclosed embodiments will be readily apparent to those skilled in the art.

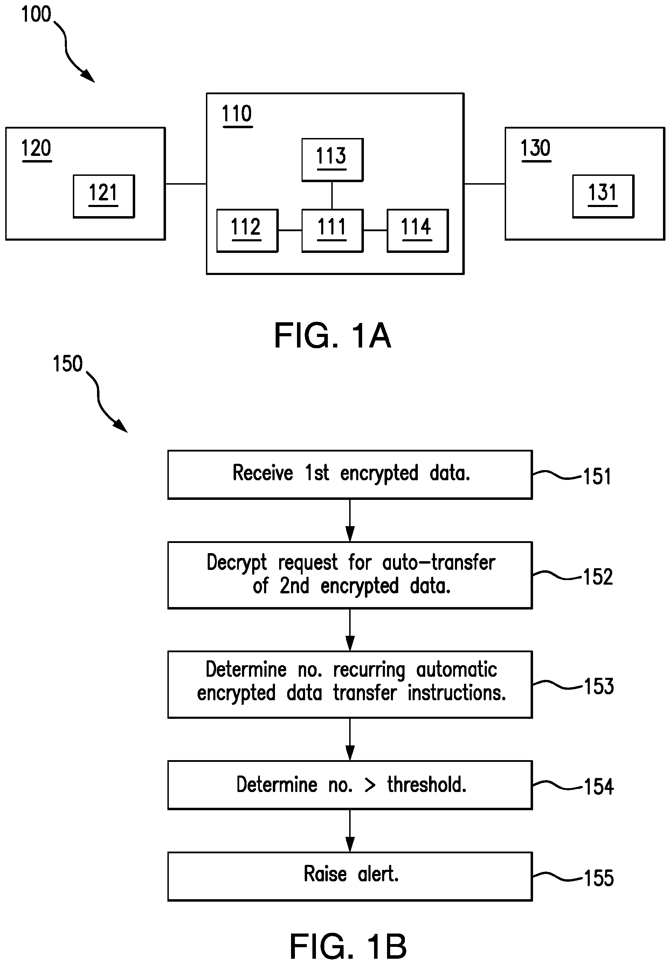

Figure 1A illustrates an example system 100. The system 100 comprises a first server 110 communicably linked to a second server 120 and a third server 130. The first server 110 comprises a processor 111, communicably linked to a receiver 112, a memory 113 and an output 114. The second server 120 comprises an originating data store 121. The third server 130 comprises a receiving data store 131.

Figure 1B is a flowchart showing a method 150 for raising a security alert performed by the first server 110. At 151 the receiver 112 receives first encrypted data. At 152 the processor 111 decrypts the first encrypted data to identify a request for automatic transfer of second encrypted data from the originating data store 121 on the second server 120 to the receiving data store 131 on the third server 130. At 153 the processor 111 analyses the identified request and stored data stored in the memory 113 to determine a number of recurring automatic encrypted data transfer instructions for transfer of encrypted data from the originating data store 121 to the receiving data store 131. At 154 the processor 111 determines that the number of recurring automatic encrypted data transfer instructions exceeds a predetermined threshold stored in the memory 113. In response to this determination, at 155 the output 114 raises an alert.

While the method 150 has been described above in the context of the system 100, it could alternatively be performed in other systems. For example, one or more of the functions described above as being performed locally to the first server 110 could instead be performed remotely from the server 110. For example processing or data storage functions could be performed at another computer system communicably linked to the server 110.

The output 114 could be a user interface device such as a screen, light or speaker which directly alerts a human being of the risk of unauthorised automatic data transfer. Alternatively, the output could be a transmitter which raises the alert by transmitting an alert message to another computing system having such a user interface device so that a human being can be alerted. As another alternative, if automatic procedures are set up for addressing unauthorised automatic data transfer, the output 114 could be an output to another module of the first server 110 which can enact those procedures.

The method and system described above could be used in any context in which automatic data transfer needs to be secured.

For example, the second server 120 could be a cloud storage server storing a plurality of originating data stores 121, wherein each originating data store corresponds to a particular customer account. The third server 130 could be a backup server storing a plurality of receiving data stores 131 corresponding to respective originating data stores 121 on the second server 120. Each customer could set up their account such that backup from the second server to the third server automatically occurs on a periodic basis. The details of the automatic backup could vary between accounts, for example some customers may opt for daily backup while others opt for hourly backup. Each account could be subdivided, for example so that different employees within a business could make use of the service but with settings of their own choosing. Each employee could thus set up a recurring automatic encrypted data transfer instruction. The number of employees within the business could be recorded and used as a threshold. If the number of recurring automatic encrypted data transfer instructions for transfer of encrypted data from the originating data store associated with the account in question to the corresponding shadow account receiving data store exceeds that threshold, then an alert is raised to indicate that the system may have been hacked.

As another example, the method and system described herein could be used to prevent fraudulent use of financial account details to obtain subscription services. For example these may include subscriptions to media streaming services such as those providing television/film or music library access, publications such as newspapers, magazines and journals and utilities such as telephone, internet etc.

As used herein, the term "subscription" is used to refer to any arrangement between a customer and a merchant, wherein a product or service is provided on an on-going basis, in return for regular payments. This includes both arrangements traditionally referred to as subscriptions, such as for delivery of magazines, as well as arrangements traditionally referred to as service contracts (or similar), such as for provision of utilities. In recent years, it has become more common for such regularly repeated transactions to be made according to automatic billing instructions, which provides both customer and merchant with peace of mind that the payments will be made on time, without either party having to remember to take any action.

If a criminal fraudulently gains access to payment account details, for example by using a lost or stolen card, or cloning a card, depending on the purchases they choose to make fraud risk alerts may or may not be raised. If they choose to use the fraudulently obtained payment credentials to set up an automatic billing instruction for a subscription which fits the true account holder's profile, this will not be picked up by profile-based fraud alert mechanisms. However, an unusually high number of subscriptions with a particular merchant, paid for from a particular account, can be an indicator of fraud.

The number of subscriptions a particular household or business may have with a particular merchant depends on the product or service offered under a subscription from that merchant. For example, a household will generally only have one subscription with an internet service provider, while each member of the household may have their own music streaming service subscription.

It is not unusual for all, or the majority of, the subscriptions for a household or business to be paid for from the same account, for example a joint account held by two parents for household expenses and expenses on behalf of their children. Therefore, tracking the number of subscriptions for a particular merchant paid for with a particular account can enable determination of whether to raise a fraud risk alert. For example, an alert could be raised if two or more subscriptions are instructed from a single account for a particular utility provider. Similarly, an alert could be raised if five or more subscriptions are instructed from a single account for a particular media streaming service.

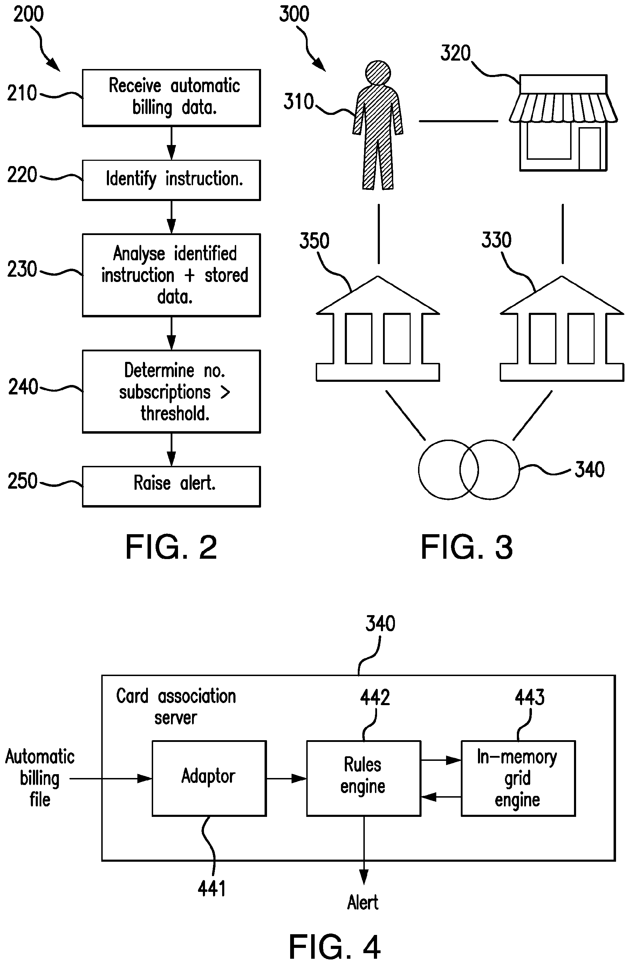

An example method 200 for raising such an alert is shown as the flowchart of Figure 2. At step 210 a card association server receives automatic billing data. At step 220 an instruction for payment from a customer account to a merchant account is identified in the automatic billing data. At step 230 the identified instruction and stored data are analysed to determine a number of subscriptions associated with both the customer and merchant accounts. At step 240 it is determined that the number of subscriptions exceeds a predetermined threshold. At step 250 an alert is raised.

An example system 300 in which such a method could be used is illustrated in Figure 3. When a customer 310 requests a subscription from a merchant 320 the merchant transmits an automatic billing instruction to the customer's bank, issuer 350, via the merchant's bank, acquirer 330, and the card association server 340.

Figure 4 schematically illustrates an example card association server 340 and the data flow within it. Automated billing files are received at a file adaptor 441, which extracts relevant data and transmits this to an in-memory grid engine 443 via a rules engine 442. The in-memory grid engine then returns data to the rules engine which enables it to determine whether to raise an alert.

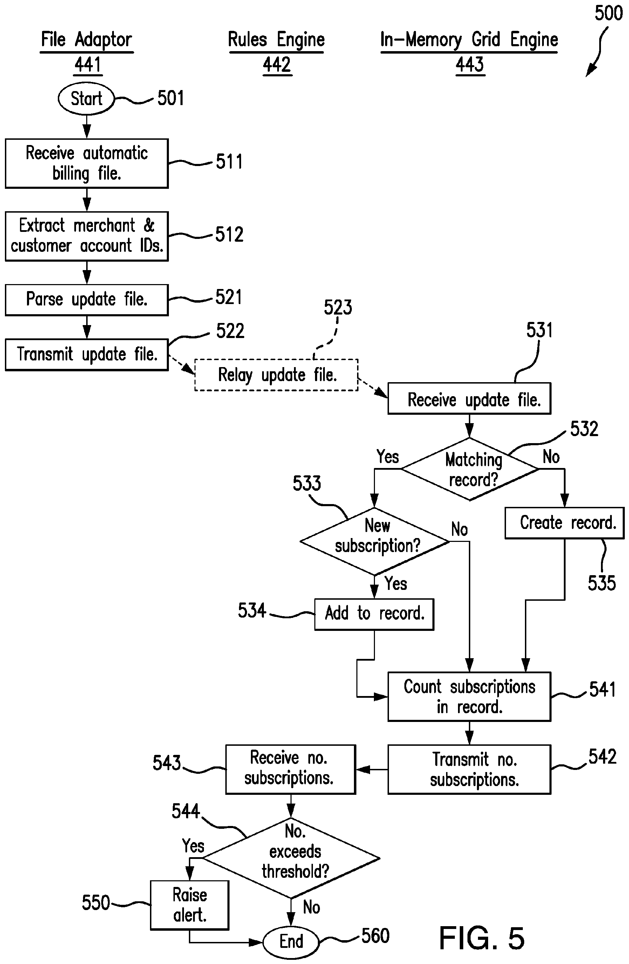

Figure 5 is a flowchart showing an example method 500 in more detail. The method starts 501 at the file adaptor 441. At step 511 the file adaptor receives an automatic billing file. At step 512 it extracts merchant and customer account identifiers from the automatic billing file. (The customer identifier could for example be a PAN.) It then parses an update file comprising both identifiers at step 521, then transmits the update file to the in-memory grid engine 443 at step 522.

Optionally, the update file may be relayed by the rules engine 442 at step 523.

The in-memory grid engine 443 receives the update file at step 531. At query 532 it determines whether it already stores a record with a combination of customer and merchant identifiers matching those in the update file. If it does, then at query 533 it is determined whether the update file represents a new subscription. If so, at step 534 the new subscription is added to the record. Storing multiple subscriptions in a single record in this way reduces the memory required compared to a list of individual subscriptions, since each customer and merchant identifier combination is only stored once.

Returning to the outcome of query 532, if no matching record is found then at step 535 a new record is created. Steps 534 and 535, and a negative response to query 533 all lead to step 541, where the number of subscriptions in the record is determined. At step 542 this number is then transmitted to the rules engine 442.

The rules engine 442 receives the number of subscriptions at step 543. It then determines whether this number exceeds a threshold stored for the merchant identifier in question at query 544. Merchant identifiers could for example be stored in association with their respective threshold values in a user-defined table. If the threshold is determined to have been exceeded, an alert is raised at step 550. If not, no action is taken. Either way, the method then ends 560.

Methods, apparatus and systems as described herein provide a means of improving the security of automatic data transfer, for example automatic data backup or automatic billing. Although the systems and methods of Figures 2 to 5 illustrate the automatic billing example, analogous systems and methods could be envisioned for other uses, including automatic data backup.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer-readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable customer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Such a communication link can optionally further comprise one or more relaying transceivers.

User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A computer-implemented method for raising a security alert, the method comprising a first server:
receiving first encrypted data;
decrypting the first encrypted data to identify a request for automatic transfer of second encrypted data from an originating data store on a second server to a receiving data store on a third server;
analysing the identified request and stored data to determine a number of recurring automatic encrypted data transfer instructions for transfer of encrypted data from the originating data store to the receiving data store;
determining that the number of recurring automatic encrypted data transfer instructions exceeds a predetermined threshold; and
responsive thereto, raising a security alert.

2. The method of claim 1, wherein the first server comprises a file adaptor, and receiving the first encrypted data comprises the file adaptor:
receiving an encrypted data file; and
extracting from the encrypted data file identifiers for the originating and receiving data stores.

3. The method of claim 2, further comprising the file adaptor:
parsing an update file comprising the originating and receiving data store identifiers; and
transmitting the update file to an in-memory grid engine comprised in the first server.

4. The method of claim 3, further comprising the in-memory grid engine:
receiving the update file;
determining that it already stores a record comprising the combination of originating and receiving data store identifiers comprised in the update file, that record listing one or more recurring automatic encrypted data transfer instructions;
determining that the update file represents a new recurring automatic encrypted data transfer instruction, and not a request according to one of the one or more recurring automatic encrypted data transfer instructions already listed in the record;
adding the new recurring automatic encrypted data transfer instruction to the list in the record;
determining the new number of recurring automatic encrypted data transfer instructions listed in the record; and
transmitting the new number of recurring automatic encrypted data transfer instructions to a rules engine comprised in the first server.

5. The method of claim 4, further comprising the rules engine:
receiving the number of recurring automatic encrypted data transfer instructions;
determining that the number of recurring automatic encrypted data transfer instructions exceeds the predetermined threshold; and
raising the alert.

6. The method of any of claims 3 to 5, wherein the update file is transmitted to the in-memory grid engine via the rules engine.

7. The method of either of claims 5 or 6, wherein the rules engine stores a user-defined table comprising:
the predetermined threshold stored in association with the receiving data store identifier; and
one or more further predetermined thresholds, each stored in association with a respective further receiving data store identifier.

8. The method of any preceding claim, wherein:
the first server is a card association server;
the first encrypted data is automatic billing data;
the second encrypted data represents monetary funds;
the originating data store is a consumer account;
the second server is an issuing bank server;
the receiving data store is a merchant account;
the third server is an acquiring bank server; and
each recurring automatic encrypted data transfer instruction represents a subscription.

9. A server configured to perform the method of any preceding claim.

10. A computer-readable medium storing computer-executable instructions which, when executed by a processor, cause the method of any of claims 1 to 8 to be performed.
